# EUROPEAN PATENT APPLICATION

(11) **EP 2 139 196 A1**
(43) Date of publication of application: **30.12.2009**
(21) Application number: 08305337.1
(22) Date of filing: 26.06.2008
(51) Int. Cl.: H04L 29/06, H04M 1/725, H04L 29/08

(54) **Method and system for remotely blocking/unblocking NFC applications on a terminal**

(71) Applicant: FRANCE TELECOM, 75015 Paris (FR)
(72) Inventor: Hernandez Martinez, Julian, 28041, Madrid (ES)

(57) **Abstract**

The invention relates to a reversible method for remotely blocking the access to at least one NFC applications running on a terminal, said method comprising for the said terminal the acts of:
• receiving a blocking order dedicated to the blocking of at least one of the said NFC applications ;
• generating a unique string of blocking bits based on the said blocking order, for the said at least one NFC application;
• scrambling original data contained in a memory zone of the terminal and authorizing the use of the said NFC application, using the said unique string of blocking bits, to generate scrambled data ;
• replacing in the said memory zone, the said original data with the generated scrambled data, for blocking the NFC application.

## Description

### FIELD OF THE PRESENT INVENTION:

The present invention generally relates to secured contactless applications hosted on mobile phones.

### BACKGROUND OF THE PRESENT INVENTION:

Today, NFC (Near Field Communication) enabled mobile phones, with NFC chips and antennas, can host many contactless applications of many types, e.g. control access to company, public transport, fidelity cards, electronic cards, etc.

Indeed, NFC is a short-range high frequency wireless communication technology which enables the exchange of data between devices over about a 10 centimeter (∼ 4 inches) distance. The technology is a simple extension of the ISO 14443 proximity-card standard (contactless card, RFID) that combines the interface of a smartcard and a reader into a single device.

An NFC device can communicate with both existing ISO 14443 smartcards and readers, as well as with other NFC devices, and is thereby compatible with existing contactless infrastructure already in use for public transportation and payment. NFC is primarily aimed at usage in mobile phones, for which, at present time, there are three main use cases:
■ card emulation: the NFC device behaves like an existing contactless card reader mode: the NFC device is active and read a passive RFID tag, for example for interactive advertising ;
■ P2P mode: two NFC devices are communicating together and exchanging information.

Plurality of applications are possible, such as:
mobile ticketing in public transport - an extension of the existing contactless infrastructure;
mobile Payment - the device acts as a debit/ credit payment card;
smart poster - the mobile phone is used to read RFID (Radio-frequency identification) tags on outdoor billboards in order to get info on the move ;

Bluetooth pairing - in the future pairing of Bluetooth 2.1 devices with NFC support will be as easy as bringing them close together and accepting the pairing. The process of activating Bluetooth on both sides, searching, waiting, pairing and authorization will be replaced by a simple "touch" of the mobile phones.

Other applications in the future could include:
■ Electronic tickets - airline tickets, concert/event tickets, and others;
■ Electronic money;
■ Travel cards;
■ Identity documents;
■ Mobile commerce;
■ Electronic keys - car keys, house/office keys, and hotel room keys, etc.

However, most of those applications require secure environment and are protected with access passwords to read and/or write the terminal (mobile phone) memory.

Another security factor really appreciated by the NFC applications issuers (e.g. bus card access, electronic cards issuers), is memory allocation hiding, since information contained in such a memory usually appears as really relevant.

For instance, if people know where a remaining money data of an electronic wallet is located, it becomes possible quite easily to increase it. The same can be said if people know the writing zone of passwords for trying to modify them.

It is known from prior art solutions that the security of such NFC applications, most of those embedded on mobile phones, is mainly based on:
■ Confidentiality of access passwords (to read and write) ; and
■ Memory mapping hiding, mainly of memory allocation of contactless applications.

Moreover, NFC enabled mobile phones allow these applications to be remotely accessible.

A major issue with the embedment of such NFC applications in new generation mobile phones is linked to the lost or theft of the mobile phone.

Such a risk is quite significant, being increased for known NFC enabled mobile phones by the fact that if on the one hand, it would be possible to remotely block or deactivate the SIM card of the mobile phone to forbid any fraudulent communication, on the other hand, any NFC application (for example: electronic card application for payment, etc.) would be still available for use by other people, without any possibility to block those NFC applications remotely.

### SUMMARY OF THE PRESENT METHOD AND SYSTEM:

It is an objective of the present method and system to overcome disadvantages and/or make improvements other the prior art.

The following method/system will allow to remotely block and unblock (for example via GSM/SMSC: for "Global System for Mobile communications / Short Message Service Center - where SMCS is a network element in the mobile phone network which delivers SMS-"Short Message Service") NFC applications while keeping hidden access passwords and memory allocation.

To that extend, the present method relates to a method for remotely blocking the access to at least one NFC applications running on a terminal, said method comprising for the said terminal the acts of:
■ receiving a blocking order dedicated to the blocking of at least one of the said NFC applications ;
■ generating a unique string of blocking bits based on said blocking order, for said at least one NFC application;
■ scrambling original data contained in a memory zone of the terminal and authorizing the use of the said NFC application, using said unique string of blocking bits, to generate scrambled data ;
■ replacing in said memory zone said original data with the generated scrambled data, for blocking the NFC application.

For instance, if a mobile phone is lost and this phone has an NFC electronic card application on it, the card issuer, requested by the phone owner, will be able to send a blocking order of the electronic credit card application. The order will be delivered to the phone as soon as the mobile phone is switched on via a SMS message delivered to an SMSC (for "SMS center"), and the NFC electronic card application will be unusable. If the phone is found the card issuer will be able to unblock (restore) the application sending an unblocking order, enabling the electronic credit card application again.

Indeed, it is important to explain that for using an NFC application, the NFC readers have first, most of the time, to identify the card id or User Id and usually are protected with one time hexadecimal temporary password.

In a normal use, an NFC access control reader will read the User Id contained in a dedicated memory allocated zone (i.e user_Id = 0000...) and a one time Hexadecimal Temporary Password - HTP (i.e. HTP = 907...). The reader will compare it with the user information it has in a specific database, and will interact with the NFC application.

If the data memory, wherein this user information (User Id and HTP) is allocated, has been scrambled with a reversible scrambling method, the User Id will be something like 3361... and the Hexadecimal Temporary Password will be 6A... The access application will reject the card because there is no such user_id, neither that password, so the application is virtually blocked.

As a consequence, an NFC access control reader will not be able to find a correspondence between the user data contained for the said corresponding NFC application within its database, and the scrambled data generated using the blocking method according to the invention, thus blocking the NFC application.

In a preferred embodiment of the invention, the said blocking order is received on the terminal by a NFC blocking/ unblocking entity activated on the said terminal for controlling the execution of each said NFC applications.

In another possible embodiment of the invention, the said act of generating the said string of blocking bits is executed by the said NFC blocking/ unblocking entity.

In an advantageous embodiment of the invention, the method further comprises an act for the said terminal, of sending an acknowledgement in response to the said blocking order, to an NFC control operator, to confirm the blocking of the said at least one NFC application.

In a preferred embodiment of the invention, the said blocking order is ciphered using a private key established respectively by each NFC control operator in charge of each NFC application running on the said terminal.

In another preferred embodiment of the invention, the said terminal being a mobile phone, the said blocking order transmitted by NFC control operator to an NFC blocking/ unblocking NFC application system, contains the following data:
■ a mobile subscriber identification number (MSISDN);
■ at least one memory block number;
■ at least one NFC password access code for accessing one corresponding NFC application executed by the said mobile phone;
■ a data type of the said order representative of a blocking or unblocking order, respectively.

In another possible embodiment of the invention, the said blocking order transmitted by the said NFC blocking/ unblocking NFC application system to the said NFC blocking entity, contains the following data:
■ the said mobile subscriber identification number (MSISDN);
■ the said at least on memory block number;
■ the said at least one NFC password access code for accessing one corresponding NFC application executed by the said mobile phone;
■ the said data type of the said order representative of a blocking or unblocking order, respectively;
■ a date an time the said NFC blocking/ unblocking NFC application system has received the said order.

In an alternate embodiment of the invention, the said blocking order is transmitted using ciphered Other The Air (OTA) messages with at least 24 bytes ciphering keys.

The invention also relates to a method for remotely unblocking the access to at least one NFC applications running on a terminal and that have been previously blocked by a method for remotely blocking NFC application, as mentioned above, said method comprising for the said terminal the acts of:
■ receiving an unblocking order for unblocking at least one NFC applications previously blocked using a blocking method as the one described above ;
■ generating a unique string of unblocking bits based on the said unblocking order, for the said at least one NFC application;
■ unscrambling original data contained in a memory zone of the terminal and authorizing the use of the said NFC application, using the said unique string of unblocking bits;
■ replacing in the said memory zone, the said scrambled data with the regenerated original data, for authorizing the use of the said NFC application.

Thus, the invention provides a reversible method that give now the opportunity for an NFC control operator in charge of the management and control of an NFC application, to remotely block or unblock any kind of NFC applications running on terminal, and more precisely on mobile phones. Such a reversible method is particularly interesting since it also offers to mobile phone and NFC applications users a high level of security.

In a preferred embodiment of the invention, the said unblocking order is received on the terminal by a NFC blocking/unblocking entity activated on the said terminal for controlling the execution of each said NFC applications.

In another preferred embodiment of the invention, the said act of generating the said string of unblocking bits is executed by the said NFC blocking/ unblocking entity.

In another possible embodiment of the invention, the unblocking method further comprising an act for the said terminal, of sending an acknowledgement in response to the said unblocking order, to an NFC control operator, to confirm the unblocking of the said at least one NFC previously blocked application.

The invention also relates to a system for remotely blocking the access to at least one NFC applications running on a terminal, said system comprising for the said terminal:
■ means for receiving a blocking order dedicated to the blocking of at least one of the said NFC applications ;
■ means for generating a unique string of blocking bits based on the said blocking order, for the said at least one NFC application;
■ means for scrambling original data contained in a memory zone of the terminal and authorizing the use of the said NFC application, using the said unique string of blocking bits, to generate scrambled blocking data ;
■ means for replacing in the said memory zone, the said original data with the generated scrambled data, for blocking the NFC application.

In a preferred embodiment of the invention, the said terminal contains an NFC blocking/ unblocking entity aiming at receiving blocking/ unblocking orders and controlling the execution of each said NFC applications.

In a particular embodiment of the invention, the said NFC blocking/unblocking entity is aiming at generating the said string of blocking bits.

In another preferred embodiment of the invention, the system further comprises means for sending an acknowledgement in response to the said blocking order, to an NFC control operator, to confirm the blocking of the said at least one NFC application.

In another preferred embodiment of the invention, the system further comprises means for ciphering the said blocking order, using a private key established respectively by each NFC control operator in charge of each NFC application running on the said terminal.

In a specific embodiment of the invention, the said terminal being a mobile phone, the said blocking order transmitted by NFC control operator to an NFC blocking/ unblocking NFC application system, contains the following data:
■ a mobile subscriber identification number (MSISDN);
■ at least on memory block number;
■ at least one NFC password access code for accessing one corresponding NFC application executed by the said mobile phone;
■ a data type of the said order representative of a blocking or unblocking order, respectively.

In a preferred embodiment of the invention, the said blocking order transmitted by the said NFC blocking/ unblocking NFC application system to the said NFC blocking entity, contains the following data:
■ the said mobile subscriber identification number (MSISDN);
■ the said at least on memory block number;
■ the said at least one NFC password access code for accessing one corresponding NFC application executed by the said mobile phone;
■ the said data type of the said order representative of a blocking or unblocking order, respectively;
■ a date an time the said NFC blocking/ unblocking NFC application system has received the said order.

### BRIEF DESCRIPTION OF THE DRAWINGS

The present system and method are explained in further detail, and by way of example, with reference to the accompanying drawings wherein:
FIG. 1 shows an illustration an embodiment of the system for blocking / unblocking the access to at least one NFC applications running on a terminal, according to the invention;
FIG. 2 shows a flow diagram illustrating an embodiment of the present methods for blocking/ unblocking the access to at least one NFC applications running on a terminal.

### DETAILED DESCRIPTION OF THE PREFERRED EMBODIMENTS:

The following are descriptions of exemplary embodiments that when taken in conjunction with the drawings will demonstrate the above noted features and advantages, and introduce further ones.

In the following description, for purpose of explanation rather than limitation, specific details are set forth such as architecture, interfaces, techniques, etc., for illustration. However, it will be apparent to that ordinary skill in the art that other embodiments that depart from these details would still be understood to be within the scope of the appended claims.

It should also be expressly understood that the drawings are included for illustrative purposes and do not represent the scope of the present system.

For example, the invention allows to remotely block and unblock (via GSM/SMSC) NFC applications keeping hidden access passwords and memory allocation.

For instance, if a mobile phone is lost and this phone has an NFC electronic card application on it, the card issuer, requested by the phone owner, will be able to send a blocking order of the electronic credit card application. The order will be delivered to the phone as soon as the mobile phone is switched on via a SMS, and the electronic card application will be unusable. If the phone is found the card issuer will be able to unblock (restore) the application sending an unblocking order, enabling the electronic credit card application again.

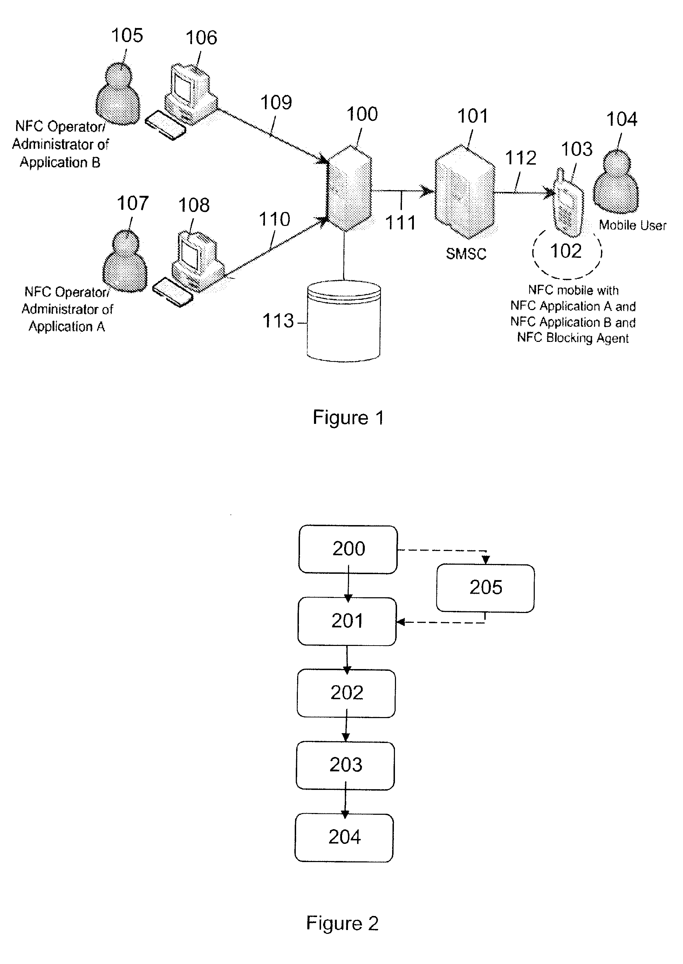

FIG. 1 shows the architecture and components involved within the system according to the invention.

The main components involved are:
■ NFC Application Blocking System 100 (NABS);
■ SMSC 101 (Short Message Service Centre);
■ NFC blocking agent 102 in mobile phone 103 of a user 104.

In a present embodiment of the system according to the invention a strong authentication method, (two factor authentication method, to log in the NABS 100, the NABS operator/administrator must have something - RSA token -, and also must know something -a PIN-) could be implemented, such as digital signature authentication, and/or biometrics.

The NABS 100 will allow to create/ delete NFC applications operators/administrators profiles.

In order to increase the confidentiality, the NFC Control Operator/Administrator (105, 106 - 107, 108) will cipher the blocking/unblocking order 109, 110 with a ciphering method based on private key, those private key in both points are going to be setup/established by each NFC operator/administrator, those keys are going to be only used in the path between NFC Operator/administrator client (105, 106 - 107, 108) and NABS 100 an are NFC Operator/Administrator dependant.

The NABS 100, will collect the ciphered order 106, 108, will decipher it, and extract the information, (MSISDN for Mobile Subscriber ISDN Number, that maked reference to the mobile phone number of the user, Memory Block Number, NFC Password and type of order), the system will register/record all the data but the NFC password, and will also register the NABS system date and time of the received blocking order 106, 108.

The NABS 100 will compose a blocking order (Freddy: from what, using what ? recycling the information from the ciphered order 106 ???); this blocking order will be sent (arrow 111) to the NFC blocking/unblocking agent 102 in the mobile phone 103 via SMS. The information exchanged will be ciphered with a private key algorithm. The used keys are different from the ones used in the https interface. The keys are going to be kept in secure element, in the SIM. As explained later on.

The NABS 100 will send this information as a binary SMS with the longest SMS validity time allowed, and requesting delivery notification. The SMSC 101 will keep informed to the NABS 100 about SMS delivery status, also the NFC blocking/unblocking Mobile agent 102 will inform about the operation result, to the NABS 100. The NABS 100 will keep informed about the blocking/unblocking results for the NABS operators/administrators (105, 106 -107, 108).

The NABS 100 may register the date and time of the blocking order, associated to application and mobile phone number. The unblocking order towards the NFC Blocking Agent 102 will require the date and time of the blocking order.

The blocking order as an SMS will be delivered 112 to the mobile phone 103 by the GSM/UMTS network, a "push registry" mechanism (J2ME- MIDP 2.0 -JSR 118-) will awake the NFC blocking agent 102, and will give the order to it.

To perform the blocking, the NFC blocking mobile agent 102 will generate "on the fly" a string of blocking bits as long as the NFC memory block, the NFC mobile agent 102 will read all the memory block. It will apply an "exclusive or" operation among each memory blocks with the string of blocking bits.

Such a logical operation exclusive disjunction, also called "exclusive or", (symbolized XOR or EOR), is a type of logical disjunction on two operands that results in a value of "true" if and only if exactly one of the operands has a value of "true".

Put differently, exclusive disjunction is a logical operation on two logical values, typically the values of two propositions, that produces a value of true just in cases where the truth value of the operands differs.

This will modify the memory in a way that the applications readers are not going to understand, blocking in fact the NFC application.

The string of blocking bits will be generated internally by the NFC mobile blocking agent 102, with an algorithm that will use as input, mobile phone 103 number, date and time, as illustrated here after.

Any mathematical algorithm that will use such input data, and/ or some more else, could be used for generating a string of blocking bits. One method is detailed later on in the present document.

In order to unblock, the NFC blocking agent 102 will also generate "on the fly" the previous string of blocking bits, and will perform a new "exclusive or" among each memory block involved, restoring the previous understandable data on the NFC memory.

In relation with FIG.1, we show the sequence of data which are exchanged between the different main entities of the system according to the invention, following a basic block/unblock order transferred from a controlling application console belonging to an NFC application operator, to a mobile phone powered on executing an NFC application.

First, a blocking (or unblocking, in case of unblocking a previously blocked NFC application) order is sent 109 (respectively 110) from an operator console 106 (respectively 108) belonging to an NFC Control Operator 105 (respectively 107) to the NABS 100.

The NFC Application Blocking System 100 (NABS) is remotely accessible via https with a 1024 bits or higher public key ciphering.

The Operator/Administrator 105 (respectively 106) can establish a private key he only will know to send the orders, there will be two nested ciphering.

The operator/administrator 105 (respectively 106) may provide one or more of the following information in the blocking (respectively unblocking) order:
■ MSISDN (mobile subscriber number);
■ Memory Block Numbers;
■ NFC Password access codes;
■ Type of order (blocking / unblocking).

The NABS 100 will receive the blocking (respectively unblocking) order for treatment. It will route 111 the order to the SMSC 101 which will transfer 112 the blocking (respectively unblocking) order within an SMS to the NFC blocking/unblocking agent 102 executed on the mobile phone 103 of the mobile user 104.

The NABS 100 will use one of the following protocols, UCP, parlayX, SMPP or SMSC manufactures proprietary ones.

The NABS will send the information (data) using ciphered OTA messages with 24 bytes or longer keys.

The NABS will provide the following information in the order:
■ MSISDN (mobile subscriber number);
■ Memory Block Numbers;
■ NFC Password access codes;
■ Type of order (block/unblock);
■ Date and time (NABS received order).

After it has received the blocking (respectively unblocking) order, the blocking/unblocking agent 102 will read the memory block contained in the order and it will obfuscate the memory allocation for this memory block, thus performing a reversible blocking of the NFC application running on the mobile phone 103 and controlled by the NFC administrator/ operator (105, 106) in charge of the said NFC application.

Then, the blocking/unblocking agent 102 will send back a Blocking (respectively unblocking) order acknowledgement to the corresponding administrator/operator (105, 106), for informing him about the right or bad execution of the blocking (respectively unblocking) order.

Here is an example of application of the present invention based on a concrete use case.

A NFC mobile phone is lost, the phone owner call his card issuer (i.e. VISA), and VISA is a NFC Operator/Administrator. They want to block the NFC application to avoid a fraudulent use.

The VISA Operator logins in the NABS, and sets the private keys to cipher the communication.

Then, he sends the blocking order to the NABS, and the NABS sent it to the mobile phone NFC blocking/unblocking agent like a ciphered binary SMS.

If the mobile phone is turned on, or as soon as the phone is turned on and network attached, the mobile phone receives the order within a SMS message (or neither other standardized message format). Such an order will wake up the NFC blocking agent running on the mobile phone for execution of the received blocking order.

The NFC blocking/unblocking agent performs a reversible memory alteration that will block the electronic card application.

Hopefully, the mobile phone was finally found in a friend house were its owner forgot it.

The owner of the mobile phone will then just have to call his card issuer (VISA) and VISA Operator will generate the unblocking order that will be delivered in the same way as the blocking order. This unblocking order is sent to the NFC blocking/unblocking agent who will treat the unblocking order received within an SMS message for freeing the memory application of its blocked state, enabling the owner to use again the previously blocked NFC application.

The invention offers an affordable method to manage NFC applications remotely, for the entity called "Trusted Service Manager", in the GSMA "mobile NFC Technical guidelines".

FIG. 2 shows a flow diagram illustrating an embodiment of the present methods for blocking/ unblocking the access to at least one NFC applications running on a terminal, like a mobile phone.

According to the invention, such a method contains for the said terminal the acts of:
■ receiving 200 a blocking order dedicated to at least one of the said NFC applications;
■ generating 201 a string of blocking bits based on the blocking order, for the said at least one NFC application (the blocking bit pattern will be generated based on MSISDND, Date & Time, and will be secret) This generation of a string of blocking bits (also called blocking bit pattern) could be done in a secure element in the mobile or in the SIM card; any logical algorithm combining the above (but also even some more or from different type) data could be used for string of blocking bits generation, as explained later on. Other method could also be available to Man skilled in the art for generating string of blocking bits;
■ reading the NFC memory blocks, apply and "exclusive OR" or a similar reversible scrambling method among the previously readed memory and the internally generated string of blocking bits on each sector and storing the scrambling memory 202..

The said blocking order is received on the terminal by a NFC blocking/unblocking entity activated on the said terminal for controlling 203 the execution of each said NFC applications.

The act 201 of generating the said blocking bit pattern is executed by the said NFC blocking/ unblocking entity.

The method according to the present further comprises an act 204 for the said terminal, of sending an acknowledgement in response to the said blocking order, to an NFC control operator, to confirm the blocking of the said at least one NFC application.

For increased security reasons, the said blocking order is ciphered 205 using a private key established respectively by each NFC control operator in charge of each NFC application running on the said terminal.

Here is given a more precise example of a way of how to generate a string of blocking bits (or blocking bit pattern).

Lets suppose a mobile phone with phone number +336123456789 has implemented MIFARE Standard 1k (768 bytes of data storage, split into 16 sectors).

The NFC Control operator/ Administrator has issued an NFC access control application using sector one. It has made a memory allocation in order to register the information for this application, i.e. (48 bytes, i.e. 10 bytes for User Identity, 10 bytes for Hexadecimal Temporary Generated Password, 28 bytes free memory -with a written pattern = 01010101-).

Lets say this sector has this information or data:
■ *Decimal User Id* = 000000000001234567890 = *Binary User Id =* 00000000, 0000000, 0000000, 0000000, 0000000, 00100001, 01000011, 01100101, 10000111, 10010000;
■ Hexadecimal Temporary Generated Password = 90785634121234567890;
■ Binary Temporary Generated Password = 10010000, 10000111, 01100101, 01000011, 00100001, 00100001, 01000011, 01100101, 10000111, 10010000), and 28 not assigned bytes (01010101, 01010101, 01010101, 01010101, 01010101, 01010101, 01010101, ..., 01010101, 01010101).

The blocking/ unblocking entity 102 receives the order to block or unblock the access to a targeted NFC application executed on a terminal associated to the phone number +336112345678, with date 2008/06/12 and time 12:34:56 (Decimal 33611234567820080612123456; Binary coded 00110011, 00010110, 00100001, 01000011, 01100101, 10000111, 00000010, 10000000, 01100000, 00100001, 01000011, 01100101.

Such a twelve (12) bytes can be repeated four times (12 x 4 = 48 bytes), thus delivering a very simple algorithms to generate a 48 bytes bit pattern or string of blocking bits.

The blocking/ unblocking entity will read the real data corresponding to the aforementioned 48 bytes of the previous paragraphs (00000000, 0000000, 0000000, 0000000, 0000000, 00100001, 01000011, 01100101, 10000111, 10010000, 10010000, 10000111, 01100101,... 01010101, 01010101) and will make an "OR exclusive" (EXOR) with the generated blocking bit pattern (00110011, 00010110, 00100001, 01000011, 01100101, 10000111, 00000010, 10000000, 01100000, ....01000011, 01100101).

Then the result obtained will be written in the same memory bytes (i.e. 00000000 XOR 00110011 = 00110011, 0000000 XOR 00010110 = 00010110, ..., 00100001 XOR 10000111 = 10100110 ...01010101 XOR 01100101 = 00110000).

Such a new method is really interesting since generating such a string of blocking bits and saving within the memory will drive to the blocking of the NFC.

Indeed, within the previous example, the memory will now store this generated data '00110011, 00010110, ... , 10100110, ... , 00110000).

Later, when the access control reader try to read the User Id, the user Id will be something like 3361... and the Hexadecimal Temporary Password will be 6A...,.

After a comparison of the User Id contained in a specific database 113 containing User ID and associated NFC application reference, the access application will reject the card because it will not find any correspondence, thus blocking the access to the NFC application.

A major advantage of the proposed solution is the fact it is reversible, so that a remote NFC controlling operator can remotely access to the string of blocking bits for unblocking the NFC memory zone on the mobile, making the method reversible.

To do that, the Date and Time of the blocking order is going to be only known by NABS 100 and if the Application Operator will order unblocking for this NFC access application on this mobile phone, sending to it an unblocking order.

The NABS 100, when receiving the unblocking order will get the Date and Time of the corresponding previously sent blocking order and will send unblocking order to the Blocking/Unblocking entity 102. This entity 102 will regenerate the bit pattern (based on MSISDN and Date/Time), with the same algorithms as the one discussed above, and will get the same results (i.e. 00110011, 00010110, 00100001, 01000011, 01100101, 10000111, 00000010, 10000000, 01100000... 01000011, 01100101).

The blocking/ unblocking entity will then apply a new "OR exclusive" (EXOR) to the scrambled memory and the right and original values will be settled to: (00110011 XOR 00110011= 00000000, 00010110 XOR 00010110 = 00000000... 10100110 XOR 10000111 = 00100001... 00110000 XOR 01100101= 01010101).

Now the memory will get again:
User Id = 00000000001234567890;

Temporary password= 90785634121234567890, and 28 bytes free area with the default bit pattern equal to 01010101.

Now the information is restored and the mobile NFC access application can be used again.

## Claims

1. A method for remotely blocking the access to at least one NFC applications running on a terminal, said method comprising for the said terminal the acts of:
■ receiving a blocking order dedicated to the blocking of at least one of the said NFC applications ;
■ generating a unique string of blocking bits based on said blocking order, for said at least one NFC application;
■ scrambling original data contained in a memory zone of the terminal and authorizing the use of the said NFC application, using said unique string of blocking bits, to generate scrambled data ;
■ replacing in said memory zone said original data with the generated scrambled data, for blocking the NFC application.

2. The method of claim 1, wherein the said blocking order is received on the terminal by a NFC blocking/ unblocking entity activated on the said terminal for controlling the execution of each said NFC applications.

3. The method of claim 2, wherein the said act of generating the said string of blocking bits is executed by the said NFC blocking/ unblocking entity.

4. The method of claim 3, further comprising an act for the said terminal, of sending an acknowledgement in response to the said blocking order, to an NFC control operator, to confirm the blocking of the said at least one NFC application.

5. The method of claim 1, wherein the said blocking order is ciphered using a private key established respectively by each NFC control operator in charge of each NFC application running on the said terminal.

6. The method of claim 4, wherein the said terminal being a mobile phone, the said blocking order transmitted by NFC control operator to an NFC blocking/unblocking NFC application system, contains the following data:
■ a mobile subscriber identification number (MSISDN);
■ at least one memory block number;
■ at least one NFC password access code for accessing one corresponding NFC application executed by the said mobile phone;
■ a data type of the said order representative of a blocking or unblocking order, respectively.

7. The method of claim 6, wherein the said blocking order transmitted by the said NFC blocking/ unblocking NFC application system to the said NFC blocking entity, contains the following data:
■ the said mobile subscriber identification number (MSISDN);
■ the said at least on memory block number;
■ the said at least one NFC password access code for accessing one corresponding NFC application executed by the said mobile phone;
■ the said data type of the said order representative of a blocking or unblocking order, respectively;
■ a date an time the said NFC blocking/ unblocking NFC application system has received the said order.

8. The method of claim 7, wherein the said blocking order is transmitted using ciphered Other The Air (OTA) messages with at least 24 bytes ciphering keys.

9. A method for remotely unblocking the access to at least one NFC applications running on a terminal and that have been previously blocked by a method of claim 1, said method comprising for the said terminal the acts of:
• receiving an unblocking order for unblocking at least one NFC applications previously blocked using a blocking method according to claim 1;
• generating a unique string of unblocking bits based on the said unblocking order, for the said at least one NFC application;
• unscrambling original data contained in a memory zone of the terminal and authorizing the use of the said NFC application, using the said unique string of unblocking bits;
• replacing in the said memory zone, the said scrambled data with the regenerated original data, for authorizing the use of the said NFC application.

10. The method of claim 9, wherein the said unblocking order is received on the terminal by a NFC blocking/unblocking entity activated on the said terminal for controlling the execution of each said NFC applications.

11. The method of claim 10, wherein the said act of generating the said string of unblocking bits is executed by the said NFC blocking/ unblocking entity.

12. The method of claim 11, further comprising an act for the said terminal, of sending an acknowledgement in response to the said unblocking order, to an NFC control operator, to confirm the unblocking of the said at least one NFC previously blocked application.

13. A system for remotely unblocking at least one NFC applications running on a terminal, said system comprising for the said terminal:
• means for receiving a blocking order dedicated to the blocking of at least one of the said NFC applications ;
• means for generating a unique string of blocking bits based on the said blocking order, for the said at least one NFC application;
• means for scrambling original data contained in a memory zone of the terminal and authorizing the use of the said NFC application, using the said unique string of blocking bits, to generate scrambled data ;
• means for replacing in the said memory zone, the said original data with the generated scrambled data, for blocking the NFC application.

14. The system of claim 13, wherein the said terminal contains an NFC blocking/unblocking entity aiming at receiving blocking/ unblocking orders and controlling the execution of each said NFC applications.

15. The system of claim 14, wherein the said NFC blocking/ unblocking entity is aiming at generating the said string of blocking bits.

16. The system of claim 15, further comprising means for sending an acknowledgement in response to the said blocking order, to an NFC control operator, to confirm the blocking of the said at least one NFC application.

17. The system of claim 13, further comprising means for ciphering the said blocking order, using a private key established respectively by each NFC control operator in charge of each NFC application running on the said terminal.

18. The system of claim 16, wherein the said terminal being a mobile phone, the said blocking order transmitted by NFC control operator to an NFC blocking/unblocking NFC application system, contains the following data:
■ a mobile subscriber identification number (MSISDN);
■ at least on memory block number;
■ at least one NFC password access code for accessing one corresponding NFC application executed by the said mobile phone;
■ a data type of the said order representative of a blocking or unblocking order, respectively.

19. The system of claim 18, wherein the said blocking order transmitted by the said NFC blocking/ unblocking NFC application system to the said NFC blocking entity, contains the following data:
■ the said mobile subscriber identification number (MSISDN);
■ the said at least on memory block number;
■ the said at least one NFC password access code for accessing one corresponding NFC application executed by the said mobile phone;
■ the said data type of the said order representative of a blocking or unblocking order, respectively;
■ a date an time the said NFC blocking/ unblocking NFC application system has received the said order.
